# EUROPEAN PATENT APPLICATION

(11) **EP 2 918 569 A1**
(43) Date of publication of application: **16.09.2015**
(21) Application number: 15158865.4
(22) Date of filing: 12.03.2015
(51) Int. Cl.: C04B 35/573

(54) **PROCESS OF PRODUCING CERAMIC MATRIX COMPOSITES**

(30) Priority: 14.03.2014 US 201461953265 P
(71) Applicant: General Electric Company, Schenectady, New York 12345 (US)
(72) Inventor: Gray, Paul Edward, Newark, DE Delaware 19713 (US)
(74) Representative: Szary, Anne Catherine

(57) **Abstract**

A process for producing CMC articles (10) that includes reducing the presence of porosity and voids within the articles. The process is performed on a porous fired preform comprising a fiber reinforcement material (14) and a ceramic matrix material (18), and the preform is densified by heating the preform and a fill material to melt the fill material, and by creating a vacuum that causes the molten fill material to infiltrate and partially fill voids within the preform. While the fill material remains molten within the voids, the preform and fill material are subjected to an increased pressure to further fill the voids with the molten fill material. Thereafter, and while the preform and molten fill material therein remain subject to the increased pressure, the preform and fill material are cooled to solidify the fill material within the voids and yield a CMC article.

## Description

### BACKGROUND OF THE INVENTION

The present invention generally relates to ceramic matrix composite (CMC) articles and processes for their production. More particularly, this invention is directed to a process of producing CMC articles that includes processing steps capable of yielding CMC articles that exhibit desirable physical, mechanical, and/or microstructural properties at elevated temperatures.

Higher operating temperatures for turbomachinery, as a nonlimiting example, gas turbine engines, are continuously sought in order to increase their efficiency. CMC materials have become of particular interest because their high temperature capabilities can significantly reduce cooling air requirements. CMC materials generally comprise a ceramic fiber reinforcement material embedded in a ceramic matrix material. The reinforcement material may be discontinuous short fibers dispersed in the matrix material or continuous fibers or fiber bundles oriented within the matrix material, and serves as the load-bearing constituent of the CMC. In turn, the ceramic matrix protects the reinforcement material, maintains the orientation of its fibers, and serves to dissipate loads to the reinforcement material. Individual fibers (filaments) are often coated with a release agent, such as boron nitride (BN), to form a de-bond layer that allows for limited and controlled slip between the fibers and the ceramic matrix material.

Continuous fiber reinforced ceramic composites (CFCC) are a type of CMC that offers light weight, high strength, and high stiffness for a variety of high temperature load-bearing applications, including shrouds, combustor liners, vanes, blades, and other high-temperature components of gas turbine engines. A CFCC material is generally characterized by continuous fibers (filaments) that may be arranged to form a unidirectional array of fibers, or bundled in tows that are arranged to form a unidirectional array of tows, or bundled in tows that are woven to form a two-dimensional fabric or woven or braided to form a three-dimensional fabric. For three-dimensional fabrics, sets of unidirectional tows may, for example, be interwoven transverse to each other. Of particular interest to high-temperature applications are silicon-based composites, such as silicon carbide (SiC) as the matrix and/or reinforcement material. SiC fibers have also been used as a reinforcement material for a variety of other ceramic matrix materials, including titanium carbide (TiC), silicon nitride (Si₃N₄), and alumina (Al₂O₃).

Examples of CMC materials and particularly SiC/Si-SiC (fiber/matrix) continuous fiber-reinforced ceramic composites (CFCC) materials and processes are disclosed in U.S. Patent Nos. 5,015,540, 5,330,854, 5,336,350, 5,628,938, 6,024,898, 6,258,737, 6,403,158, and 6,503,441, and U.S. Patent Application Publication No. 2004/0067316, whose contents are incorporated herein by reference. One such process is known as "prepreg" melt-infiltration (MI), which in general terms entails the fabrication of CMCs using multiple layers of prepregs, each in the form of a tape-like structure comprising the desired ceramic fiber reinforcement material, one or more precursors of the CMC matrix material, binders, and other possible ingredients. According to conventional practice, prepregs can be formed by impregnating the reinforcement material with a slurry that contains the ceramic precursor(s) and binders that promote the pliability of the prepregs. Preferred materials for the precursor will depend on the particular composition desired for the ceramic matrix of the CMC component, for example, SiC powder and/or one or more carbon-containing materials that are ultimately converted to SiC upon reaction with molten Si. Other typical slurry ingredients include solvents for the binders that promote the fluidity of the slurry to enable impregnation of the fiber reinforcement material.

After allowing the slurry to partially dry and, if appropriate, partially curing the binders (B-staging), the resulting prepreg is laid-up with other tapes, and then debulked and, if appropriate, cured while subjected to elevated pressures and temperatures to produce a preform. The preform is then heated (fired) in a vacuum or inert atmosphere to decompose the binders, remove solvents, and convert the precursor to the desired ceramic matrix material. Due to decomposition of the binders, the result is a porous CMC preform that will later undergo melt infiltration (MI) under vacuum to fill the porosity and yield the CMC component. For example, melt-infiltration processes used to produce SiC matrices generally entail infiltrating the porous CMC preform with molten silicon supplied externally to the preform. The molten silicon infiltrates into the porosity and preferably reacts with constituents (for example, a carbon source) within the matrix to form a silicon-based ceramic (for example, silicon carbide) that fills the porosity to yield the desired CMC component. Specific processing techniques and parameters for the above process will depend on the particular composition of the materials.

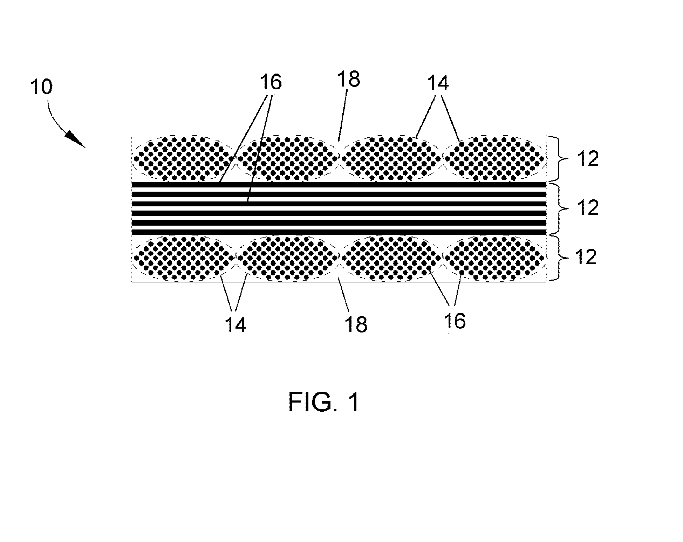

An example of a CFCC material 10 is schematically depicted in FIG. 1 as comprising multiple laminae 12, each derived from an individual prepreg that comprised unidirectionally-aligned reinforcement material 14 impregnated with a ceramic matrix precursor. As a result, each lamina 12 contains the reinforcement material 14 encased in a ceramic matrix 18 formed, wholly or in part, by conversion of the ceramic matrix precursor during firing and melt infiltration. If produced by a melt-infiltration process that entailed infiltrating a porous CMC preform with molten silicon, the CFCC material 10 may also contain elemental silicon and/or silicon alloy (which as used herein refers to silicon that is not in the form of a compound, but may be pure silicon or in the form of an alloy of silicon with other metals, such as boron).

In addition to porosity resulting from the decomposition of binders, a CMC preform may also contain ply gaps and/or poorly compacted regions. During melt infiltration, these defects define voids that may not be completely filled with molten silicon. Any remaining porosity or voids within a CMC article may affect its mechanical behavior. Therefore, there are ongoing efforts to further reduce the presence of porosity and voids within CMC articles.

### BRIEF DESCRIPTION OF THE INVENTION

The present invention provides a process for producing CMC articles that includes processing steps to reduce the presence of porosity and voids within the articles.

According to one aspect of the invention, a process is provided that entails producing unidirectional prepregs comprising a slurry and a fiber reinforcement material, stacking the prepregs, also called tapes, to form a preform, firing the preform to yield a porous fired preform comprising the fiber reinforcement material, a ceramic matrix material, and voids within the porous fired preform, and then densifying the porous fired preform. Densification is carried out by initially heating the porous fired preform and a fill material in a vacuum to melt the fill material and thereby yield a molten fill material that is desired to fill the voids of the porous fired preform, but only partially fills the voids under the effect of the vacuum. While the molten fill material remains molten within the voids, the porous fired preform and the molten fill material therein are subjected to an increased pressure to further fill the voids with the molten fill material. Thereafter, and while the porous fired preform and the molten fill material therein remain subject to the increased pressure, the porous fired preform and the molten fill material therein are cooled to solidify the molten fill material within the voids and yield a CMC article comprising the fiber reinforcement material, the ceramic matrix material, and the fill material within the voids.

According to certain preferred aspects of the invention, the process can be performed to produce turbomachine components comprising silicon-containing ceramic matrix materials.

A technical effect of the invention is the ability to produce CMC articles having reduced levels of porosity and voids, typically corresponding to improved properties for the articles, for example, physical, mechanical, and microstructural properties desirable for elevated temperatures.

Other aspects and advantages of this invention will be better appreciated from the following detailed description.

### BRIEF DESCRIPTION OF THE DRAWINGS

FIG. 1 schematically represents a fragmentary cross-sectional view of a CFCC article.
FIG. 2 schematically represents a perforated ply of a type used to produce experimental preforms having controlled voids and used in investigations leading to the present invention.
FIGS. 3 and 4 show two scanned images evidencing different levels of silicon infiltration into experimental preforms produced with perforated plies of the type shown in FIG. 2.

### DETAILED DESCRIPTION OF THE INVENTION

The present invention will be described in terms of processes for producing CMC articles, including CFCC articles, that can be used at elevated temperatures, for example, temperatures within the turbine and combustor sections of turbomachines. CMC materials of particular interest to the invention are those containing silicon, including CMCs containing silicon carbide as a reinforcement and/or matrix material, a particular but nonlimiting example of which is continuous silicon carbide fibers in a matrix of silicon carbide. However, other silicon-containing materials are also within the scope of the invention, including ceramics such as silicon nitride and silicides (intermetallics) such as niobium silicide and molybdenum silicide, as are other types of ceramic materials. While various applications are foreseeable, particular applications for the CMC articles include components of gas turbines, such as shrouds, combustor liners, vanes, blades, and other high-temperature components of gas turbine engines.

The following discussion of CMC articles relating to the invention will make reference to FIG. 1, which as noted previously is representative of a CFCC component 10. However, it should be understood that the teachings are not limited to CFCC components or the cross-sectional characteristics represented in FIG. 1. As previously discussed, the component 10 comprises multiple laminae 12, each derived from an individual prepreg that originally comprised unidirectionally-aligned tows 14 impregnated with one or more ceramic matrix precursors. The precursors are typically introduced as components of a slurry that may further include one or more binders, solvents, and other possible ingredients. As a result of debulking, curing (if appropriate) and firing a laminate preform formed by stacking (laying-up) multiple prepregs, each lamina 12 contains unidirectionally-aligned fibers 16 encased in a ceramic matrix 18 formed at least in part by conversion of the precursors during firing of the laminate preform. The resulting fired preform will often contain porosity evolving from decomposition of the binders during firing of the laminate preform. Alternatively or additionally, the fired preform may contain voids, for example, ply gaps and/or poorly compacted regions, that may adversely affect the component 10 and its mechanical behavior. Whereas melt infiltration (MI) under vacuum is commonly employed to fill the porosity and voids, a particular aspect of the invention is to perform further processing steps to further reduce porosity within the final component 10.

Suitable fiber diameters, tow diameters and center-to-center tow spacings for the tows 14 within each lamina 12 will depend on the particular application, the thicknesses of the laminae 12, and other factors, and therefore are not represented to scale in FIG. 1. According to known practice, the individual fibers 16 of the tows 14 may be coated with one or more release agents to form a de-bond fiber coating (not shown) that allows for limited and controlled slip between the matrix 18 and the tows 14 and their individual fibers 16. Suitable materials for the fiber coating include boron nitride (BN), silicon-doped BN, silicon nitride (Si₃N₄), silicon carbide (SiC), hafnium carbide (HfC), hafnium nitride (HfN), zirconium carbide (ZrC), zirconium nitride (ZrN), tantalum carbide (TaC), tantalum nitride (TaN), and mixtures thereof. Preferred fiber coatings may comprise multiple layers of one or more of these compounds. As cracks develop in the component 10, fibers 16 that bridge the crack act to redistribute the load to adjacent fibers 16 and regions of the matrix 18, thus inhibiting or at least slowing further propagation of the crack.

As previously noted, during the fabrication of the component 10a desired number of prepregs are laid-up to form the laminate preform that undergoes further processing to yield the component 10. According to conventional practice, such prepregs can be formed in a single operation, for example, by applying the precursor-containing slurry during winding of a continuous strand of tow 16 onto a drum. Various precursor-containing slurries can be applied to continuous fibers and tows to produce prepregs. Typical slurry compositions have contained ceramic precursors such as particulate SiC, carbon, and/or other carbon-containing particulate materials if the desired matrix material is SiC, and organic binders such as carbon char-yielding resins including thermosetting furan (C₄H₄O)-based resins, phenolics, novolacs, polyester, and epoxies, though other precursors and binders are also within the scope of the invention. Typical slurry compositions may further contain additional ceramic constituents of the matrix 18, organic resins that serve as processing aids (for example, polyvinybutyral and poly isobutyl methacrylate), solvents (for example, toluene, MIBK, ethylbenzene, etc.), and plasticizers for the binders (for example, dibutyl phthalate).

Following the winding operation, the slurry can be allowed to partially dry and the resulting prepreg is removed from the drum, laid-up with other tapes, and then debulked and cured (if appropriate) while subjected to elevated pressures and temperatures to form the cured laminate preform. The laminate preform is then heated in vacuum or in an inert atmosphere to decompose the binders and yield a rigid but porous preform that comprises the tows 14 (or other fiber reinforcement material), ceramic matrix 18, and porosity and voids (not shown in FIG. 1).

The following processing techniques are intended to promote the mechanical properties of CMC articles (for example, the component 10 of FIG. 1) produced by processing steps of the type described above by reducing or entirely eliminating porosity and voids within CMC article. According to a preferred aspect of the invention, reduced porosity content can be accomplished through a densification process that includes at least one melt infiltration (MI) step performed on the porous fired preform. For example, a melt infiltration step can utilize capillary wetting forces to fill porosity and voids with a suitable fill material, for example, elemental silicon, a low-melting silicon alloy, and/or any other material capable of forming a desirable material that will form a part of the matrix 18 for the component 10, nonlimiting examples of which include silicon carbide and silicon nitride. As known in the art, melt infiltration processes are particularly well suited for use in cases where the laminate preform was formed with a slurry that, upon firing, results in the as-fired porous preform containing a carbon or carbon-containing residue preferably capable of reacting with the fill material (for example, molten silicon) to form a desired ceramic material (for example, silicon carbide).

In the fabrication of the component 10 shown in FIG. 1, melt infiltration generally entails heating the porous fired preform and fill material in a vacuum to a peak temperature that is sufficient to melt the fill material, thereby yielding a molten fill material contacting the fired preform. While the fill material is molten, capillary wetting forces encourage the molten fill material to infiltrate the fired preform. Heating rates and suitable peak temperatures for this step will depend on the particular fill material, with a nonlimiting example of a peak temperature being about 1420°C or higher if the fill material is elemental silicon. Typical vacuum levels are below about 0.01 atmosphere (7.6 Torr), for example, about 0.1 to about 2.5 Torr, with a particular nonlimiting example being 1.0 Torr, though particularly suitable vacuum levels may vary depending on the flow characteristics of the molten fill material. The melt infiltration process can be performed in any suitable vacuum furnace.

Complete infiltration of the porosity within the fired preform can be inhibited by the tortuous network of pores and voids within the preform, with the result that the molten fill material is very likely to only partially fill the pores and voids. Preforms containing large pores and many finer pores are particularly at a processing disadvantage because the larger pores have a reduced propensity for capillary filling than the finer pores. Also, additional porosity may form within the fired preform during the melt infiltration process as a result of chemical reactions that may occur above the melting point of the fill material. For example an elemental silicon fill material may cause gas-producing reactions to occur with the existing ceramic matrix or other constituents of the preform, generating localized pressures within voids that can be higher than the pressure within the vacuum furnace. Elevated pressures within the voids tend to lessen the effect of capillary wetting by the molten fill material and further leading to incomplete infiltration of the fired preform. As a preferred aspect of the densification process, while the molten fill material remains molten within the pores and voids, the fired preform and the molten fill material therein are subjected to an increased pressure applied externally to the preform to promote further filling of the pores and voids with the molten fill material. While not wishing to be held to any particular theory, it is believed that the increased pressure may also have the beneficial effect of interrupting and potentially stopping gas-producing reactions within the preform, allowing gaseous species to condense to form solid phases within the pores and voids of the preform. As a nonlimiting example, if the fill material is elemental silicon or a silicon alloy, high temperatures and low pressures during melt infiltration may result in the formation of SiO, which is believed will condense to SiO₂ as the pressure is increased while maintaining the high infiltration temperature. A suitable increased pressure is believed to be at least 200 Torr, for example, about 300 to about 3800 Torr, with a particular nonlimiting example being about one atmosphere (about 760 Torr). Gases for applying the increased pressure to the preform will typically be those that are not reactive with the molten fill material, for example, nitrogen if the fill material is elemental silicon. The increase in pressure preferably occurs rapidly, for example, at a rate of about 150 Torr per second or more, and preferably occurs near the end of a time period during which the fill material is in the molten state and in contact with the porous fired preform.

While the fired preform and the molten fill material therein remain subject to the increased pressure, or at least a pressure preferably exceeding 300 Torr, the fired preform is cooled from the peak temperature to a temperature at or below the freezing point of the fill material, thereby solidifying the molten fill material within the porosity and voids and yielding a CMC article, for example, similar to the component 10 represented in FIG. 1. Cooling can be performed at any suitable rate.

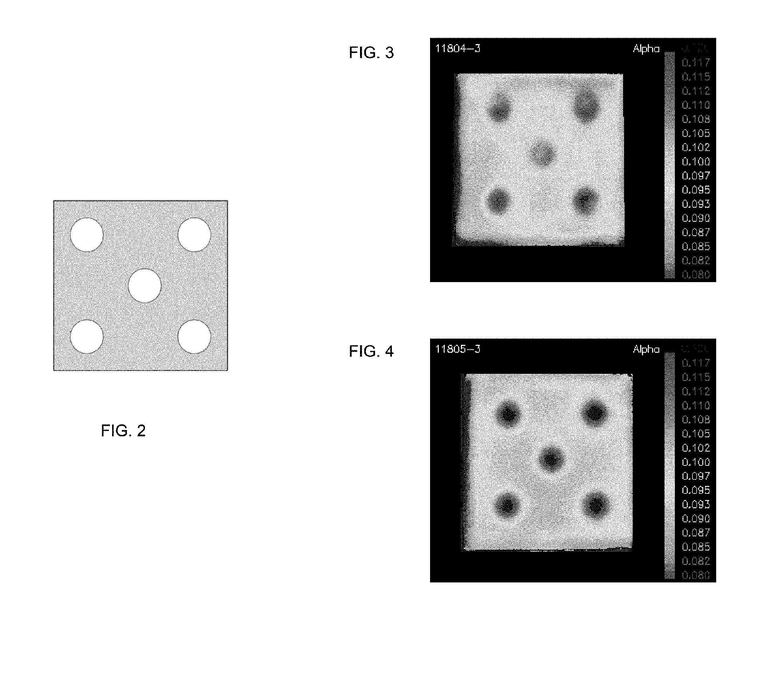

During investigations leading to the present invention, test specimens are fabricated comprising combinations of plies with and without holes. The plies were formed of unidirectional tapes of a type described in reference to FIG. 1. The plies were approximately 3x3 inches (about 7.6x7.6 cm) in area, and approximately 0.008 inch (about 0.2 mm) in thickness. Certain plies were further processed to have through-holes in a pattern as represented in FIG. 2. The through-holes were approximately one-half inch (about 1.3 cm) in diameter. The perforated and un-perforated plies were then laid-up to produce laminate preforms having the following construction: six unperforated plies; three perforated plies; four unperforated plies; six perforated plies; four unperforated plies; three perforated plies; and six unperforated plies. The laminate preforms underwent processing such as debulking and curing, prior to undergoing melt infiltration. All preforms were melt infiltrated with molten silicon by raising the temperatures of the preforms to a peak temperature of about 1435°C in a vacuum furnace at a vacuum level of about 0.8 Torr. Some of the preforms, designated as baseline preforms, were held under these conditions for a duration of about 90 minutes, after which the melt-infiltrated preforms were allowed to cool to a temperature of about 1100°C while maintaining the vacuum, such that the infiltrated molten silicon solidified while the preforms remained subjected to the vacuum. Other preforms, designated as experimental preforms, were held under these conditions for a duration of about 90 minutes, after which the pressure within the furnace was increased to about one atmosphere (about 760 Torr) by rapidly backfilling the furnace with nitrogen gas while the preforms remained at about 1435°C. These melt-infiltrated preforms were then allowed to cool to a temperature of about 1100°C while maintaining the pressure, such that the infiltrated molten silicon solidified while the experimental preforms were subjected to one atmosphere of pressure.

FIGS. 3 and 4 contain transmission infrared (IR) thermal diffusivity images of, respectively, baseline and experimental melt-infiltrated preforms produced by one of the two different infiltration techniques described above. FIG. 3 is an image of a melt-infiltrated baseline preform produced by solidifying the infiltrated molten silicon while subjected to the 0.8 Torr vacuum, and FIG. 4 is an image of a melt-infiltrated experimental preform produced by solidifying the infiltrated molten silicon while subjected to one atmosphere of pressure. As evident from FIGS. 3 and 4, the application of increased pressure prior to solidification of the fill material resulted in more complete infiltration by the molten silicon, thereby completely filling the pores within the experimental preform as compared to the baseline preform. Subsequent polished section metallography of the voided regions visible in FIGS. 3 and 4 confirmed that the voids in the experimental preform of FIG. 4 were completely filled with silicon, whereas the voids in the baseline preform of FIG. 3 were not.

While the invention has been described in terms of particular embodiments, it is apparent that other forms could be adopted by one skilled in the art. For example, the parameters and materials used in the above noted processes could differ from those described, and additional processes other than those noted could be used. It should also be understood that the phraseology and terminology employed above are for the purpose of disclosing the embodiments, and do not necessarily serve as limitations to the scope of the invention. Finally, while the appended claims recite certain aspects believed to be associated with the invention as indicated by the investigations discussed above, they do not necessarily serve as limitations to the scope of the invention.

Various aspects and embodiments of the present invention are defined by the following numbered clauses:
1. A process for producing a CMC article, the process comprising:
   producing unidirectional prepregs comprising a slurry and a fiber reinforcement material;
   stacking the prepregs to form a preform;
   firing the preform to yield a porous fired preform comprising the fiber reinforcement material, a ceramic matrix material, and voids within the porous fired preform; and then
   densifying the porous fired preform by:
      heating the porous fired preform and a fill material to melt the fill material and thereby yield a molten fill material and creating a vacuum within the voids of the
      porous fired preform to cause the molten fill material to infiltrate the porous fired preform and partially fill the voids with the molten fill material;
   while the molten fill material remains molten within the voids, subjecting the porous fired preform and the molten fill material therein to an increased pressure to further fill the voids with the molten fill material; and then
   while the porous fired preform and the molten fill material therein remain subject to the increased pressure, cooling the porous fired preform and the molten fill material therein to solidify the molten fill material within the voids and yield a CMC article comprising the fiber reinforcement material, the ceramic matrix material, and the fill material within the voids.
2. The process of clause 1, wherein the slurry comprises one or more organic binders that are pyrolized during the firing step to form at least some of the voids.
3. The process of clause 1 or clause 2, wherein at least some of the voids comprise ply gaps between the prepregs that form the porous fired preform.
4. The process of any preceding clause, wherein at least some of the voids comprise incompletely compacted regions within the porous fired preform.
5. The process of any preceding clause, wherein the increased pressure to which the porous fired preform and the molten fill material are subjected is applied with nitrogen gas.
6. The process of any preceding clause, wherein the increased pressure is about one atmospheric pressure.
7. The process of any preceding clause, wherein the fill material is at least one of elemental silicon and a low-melting silicon alloy.
8. The process of any preceding clause, wherein the CMC article is a silicon-containing CMC article.
9. The process of any preceding clause, wherein the fiber reinforcement material comprises silicon carbide.
10. The process of any preceding clause, wherein the ceramic matrix material comprises silicon carbide.
11. The process of any preceding clause, wherein the CMC article is a component of a turbomachine.
12. The process of clause 11, further comprising installing the component in a gas turbine engine.
13. A process for producing a turbomachine component, the process comprising:
   producing unidirectional prepregs comprising a fiber reinforcement material and a slurry that contains a binder and a ceramic precursor;
   stacking the prepegss to form a preform;
   firing the preform to yield a porous fired preform comprising the fiber reinforcement material, a silicon-containing ceramic matrix material, and voids within the porous fired preform, the binder being pyrolized to form at least some of the voids; and then
   densifying the porous fired preform by:
      heating the porous fired preform and a silicon-containing fill material to melt the fill material and thereby yield a molten fill material and creating a vacuum within the voids of the porous fired preform to cause the molten fill material to infiltrate the porous fired preform and partially fill the voids with the molten fill material;
      while the molten fill material remains molten within the voids, subjecting the porous fired preform and the molten fill material therein
      to an increased pressure to further fill the voids with the molten fill material; and then
      while the porous fired preform and the molten fill material therein remain subject to the increased pressure, cooling the porous fired preform and the molten fill material therein to solidify the molten fill material within the voids and yield a turbomachine component comprising the fiber reinforcement material, the ceramic matrix material, and the fill material within the voids.
14. The process of clause 13, wherein at least some of the voids comprise ply gaps between the preforms that form the porous fired preform or incompletely compacted regions within the porous fired preform.
15. The process of clause 13 or clause 14, wherein the increased pressure to which the porous fired preform and the molten fill material are subjected is applied with nitrogen gas.
16. The process of any one of clauses 13 to 15, wherein the increased pressure is about one atmospheric pressure.
17. The process of any one of clauses 13 to 16, wherein the fill material is at least one of elemental silicon and a low-melting silicon alloy.
18. The process of any one of clauses 13 to 17, wherein the fiber reinforcement material comprises silicon carbide.
19. The process of any one of clauses 13 to 18, wherein the ceramic matrix material comprises silicon carbide.
20. The process of any one of clauses 13 to 19, further comprising installing the component in a gas turbine engine.

## Claims

1. A process for producing a CMC article (10), the process comprising:
producing unidirectional prepregs (12) comprising a slurry and a fiber reinforcement material (14);
stacking the prepregs (12) to form a preform;
firing the preform to yield a porous fired preform comprising the fiber reinforcement material (14), a ceramic matrix material (18), and voids within the porous fired preform; and then
densifying the porous fired preform by:
heating the porous fired preform and a fill material to melt the fill material and thereby yield a molten fill material and creating a vacuum within the voids of the porous fired preform to cause the molten fill material to infiltrate the porous fired preform and partially fill the voids with the molten fill material;
while the molten fill material remains molten within the voids, subjecting the porous fired preform and the molten fill material therein to an increased pressure to further fill the voids with the molten fill material; and then
while the porous fired preform and the molten fill material therein remain subject to the increased pressure, cooling the porous fired preform and the molten fill material therein to solidify the molten fill material within the voids and yield a CMC article (10) comprising the fiber reinforcement material (14), the ceramic matrix material (18), and the fill material within the voids.

2. The process of claim 1, wherein the slurry comprises one or more organic binders that are pyrolized during the firing step to form at least some of the voids.

3. The process of claim 1 or 2, wherein at least some of the voids comprise ply gaps between the prepregs (12) that form the porous fired preform.

4. The process of any one of claims 1 to 3, wherein at least some of the voids comprise incompletely compacted regions within the porous fired preform.

5. The process of any one of claims 1 to 4, wherein the increased pressure to which the porous fired preform and the molten fill material are subjected is applied with nitrogen gas.

6. The process of any one of claims 1 to 5, wherein the increased pressure is about one atmospheric pressure.

7. The process of any one of claims 1 to 6, wherein the fill material is at least one of elemental silicon and a low-melting silicon alloy.

8. The process of any one of claims 1 to 7, wherein the CMC article (10) is a silicon-containing CMC article.

9. The process of any one of claims 1 to 8, wherein the fiber reinforcement material (14) comprises silicon carbide.

10. The process of any one of claims 1 to 9, wherein the ceramic matrix material (18) comprises silicon carbide.

11. The process of any one of claims 1 to 10, wherein the CMC article (10) is a component of a turbomachine.

12. The process of claim 11, further comprising installing the component in a gas turbine engine.
